# EUROPEAN PATENT APPLICATION

(11) **EP 3 991 562 A1**
(43) Date of publication of application: **04.05.2022**
(21) Application number: 21203305.4
(22) Date of filing: 18.10.2021
(51) Int. Cl.: A21C 1/02, A21C 1/14, B01F 27/96, A47J 43/07, B01F 27/807, B01F 27/13

(54) **MIXING BEATERS FOR USE WITH A STAND MIXER**

(30) Priority: 30.10.2020 US 202063108071 P; 29.09.2021 US 202117489436
(71) Applicant: WHIRLPOOL CORPORATION, Benton Harbor Michigan 49022 (US)
(72) Inventor: Jayabalan, Naveen, 21024 Cassinetta di Biandronno (VA) (IT); Mock, Brandon T., 21024 Cassinetta di Biandronno (VA) (IT); Snyder, Joseph, 21024 Cassinetta di Biandronno (VA) (IT); Wolters, Jeremy T., 21024 Cassinetta di Biandronno (VA) (IT)
(74) Representative: Spina, Alessandro

(57) **Abstract**

A mixing beater (30, 130, 230, 330) for a stand mixer (10) includes a collar (60, 160, 260, 360) configured to removably couple the mixing beater (30, 130, 230, 330) with the stand mixer (10). A frame (72, 172, 272, 372) is coupled with the collar (60, 160, 260, 360) and includes a pair of opposing first and second arms (74, 174, 274, 374 and 76, 176, 276, 376). The first and second arms (74, 174, 274, 374 and 76, 176, 276, 376) are coupled at their respective distal ends by a frame tip (78, 178, 278, 378). A central axis (86) of the mixing beater (30, 130, 320, 330) extends through the frame tip (78, 178, 278, 378), between the opposing first and second arms (74, 174, 274, 374 and 76, 176, 276, 376). A plurality of ribs (90, 90a-90d, 90'a, 90"a, 190, 190a-190e, 290, 290a-290e, 390, 390a-390g) extends between the first and second arms (74, 174, 274, 374 and 76, 176, 276, 376). Each rib (90, 90a-90d, 90'a, 90"a, 190, 190a-190e, 290, 290a-290e, 390, 390a-390g) has a rib central axis (96, 96a-96d, 96'a, 96"a) that extends orthogonal to the central axis (86) of the mixing beater (30, 130, 230, 330) and each of the plurality of ribs (90, 90a-90d, 90'a, 90"a, 190, 190a-190e, 290, 290a-290e, 390, 390a-390g) is spaced from an adjacent rib (90, 90a-90d, 90'a, 90"a, 190, 190a-190e, 290, 290a-290e, 390, 390a-390g) to define a space (S, Sₐ-S_{g}) between adjacent ribs (90, 90a-90d, 90'a, 90"a, 190, 190a-190e, 290, 290a-290e, 390, 390a-390g).

## Description

### BACKGROUND OF THE DISCLOSURE

The present disclosure generally relates to mixing beaters for use with a stand mixer, and more specifically, to a pastry mixing beater for use with a stand mixer.

### SUMMARY OF THE DISCLOSURE

According to one aspect of the present disclosure, a mixing beater for a stand mixer includes a collar configured to removably couple the mixing beater with the stand mixer. A frame is coupled with the collar and includes a pair of opposing first and second arms. The first and second arms are coupled at their respective distal ends by a frame tip. A central axis of the mixing beater extends through the frame tip, between the opposing first and second arms. A plurality of ribs extends between the first and second arms. Each rib has a rib central axis that extends orthogonal to the central axis of the mixing beater and each of the plurality of ribs is spaced from an adjacent rib to define a space between adjacent ribs.

According to another aspect of the present disclosure, a mixing beater for coupling to a drive shaft of a stand mixer includes a collar configured to removably couple the mixing beater with the drive shaft of the stand mixer. A frame is coupled with the collar and includes a pair of opposing first and second arms that are coupled at their respective distal ends by a frame tip. A central axis of the mixing beater extends through the frame tip, between the opposing first and second arms. A plurality of ribs extends between the first and second arms. Each rib has a rib central axis that extends orthogonal to the central axis of the mixing beater. Each of the plurality of ribs has a width and a thickness and a ratio of the width to the thickness is greater than or equal to 1 and less than or equal to 3.

According to yet another aspect of the present disclosure, a mixing beater for a stand mixer includes a collar configured to removably couple the mixing beater with the stand mixer. A frame is coupled with the collar and includes a pair of opposing first and second arms. The first and second arms are coupled at their respective distal ends by a frame tip. A central axis of the mixing beater extends through the frame tip, between the opposing first and second arms and a plurality of ribs extends between the first and second arms. Each rib has a rib central axis that extends orthogonal to the central axis of the mixing beater. A vertical plane is aligned with the central axis of the mixing beater and extends through the first and second arms and the frame tip. The plurality of ribs is aligned with the vertical plane. Each of the plurality of ribs has a width and a thickness, and a ratio of the width to the thickness is greater than or equal to 1 and less than or equal to 3.

Some aspects of the present disclosure relate to a mixing beater that is configured to facilitate the re-shaping of solids into small pieces during a mixing process. In some aspects, the mixing beater is configured to facilitate the re-shaping of baking solids, such as butter and shortening, into small pieces (e.g., pea-sized and/or squashed pea-sized pieces) suitable for forming pastry and pie crust dough without overworking the dough. In this manner the mixing beater of the present disclosure can facilitate forming a pastry or pie crust dough that is more likely to have the desired flaky and light texture compared to a conventional mixing beater in which long mixing periods and/or high speeds are used to re-size the baking fats.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a side perspective view of a stand mixer and a mixing beater, according to aspects of the present disclosure;
FIG. 2 is a side elevational cross-sectional view of a bowl of the stand mixer of FIG. 1 with the mixing beater of FIG. 1, according to aspects of the present disclosure;
FIG. 3 is a front elevational view of the mixing beater of FIG. 1, according to aspects of the present disclosure;
FIG. 4 is a top perspective view of the mixing beater of FIG. 1, according to aspects of the present disclosure;
FIG. 5 is a side elevational view of the mixing beater of FIG. 1, according to aspects of the present disclosure;
FIG. 6 is a cross-sectional view of a rib of a mixing beater, according to aspects of the present disclosure;
FIG. 7 is a cross-sectional view of a rib of a mixing beater, according to aspects of the present disclosure;
FIG. 8 is a cross-sectional view of a rib of a mixing beater, according to aspects of the present disclosure;
FIG. 9 is a cross-sectional view of a frame of a mixing beater, according to aspects of the present disclosure;
FIG. 10 is an elevational front view of a mixing beater, according to aspects of the present disclosure;
FIG. 11 is an elevational front view of a mixing beater, according to aspects of the present disclosure; and
FIG. 12 is an elevational front view of a mixing beater, according to aspects of the present disclosure.

The components in the figures are not necessarily to scale, emphasis instead being placed upon illustrating the principles described herein.

### DETAILED DESCRIPTION

The present illustrated embodiments reside primarily in combinations of apparatus components relating to a mixing beater for use with a stand mixer, and more specifically for a mixing beater suitable for use in mixing pastry or pie crust doughs. Conventional baking practice for preparing pastries and pie crusts having the desired texture typically involves the use of a hand-held pastry cutter to cut solid baking fats, e.g., butter and shortening, into small pieces (roughly the size of a pea) and incorporating the small pieces into the other dough ingredients (e.g., flour). Stand mixers provide consumers with the ability to mix ingredients using a motor-operated mixing beater. However, conventional mixing beaters may require longer of periods of operation in order to form small pieces of butter or shortening. Mixing for long periods of time can overwork the dough, which can result in a dough that produces a pastry or pie crust that does not have the desired light and flaky texture. Aspects of the present disclosure provide a mixing beater that is configured to facilitate the formation of small pieces of butter and/or shortening having a size that is desirable for use in the preparation of a pastry or pie crust dough. In some aspects, the mixing beater of the present disclosure is configured to form small pieces of butter and/or shortening having the desired size at a faster rate than a conventional flat beater, which may minimize the likelihood of overworking the dough and thus improve the texture of the baked pastry or pie crust. While aspects of the present disclosure are discussed in the context of re-shaping solid fats, such as butter and shortening, into smaller pieces during a mixing process to make a pastry or pie crust dough, it is understood that the mixing beater of the present disclosure can be used in any mixing process where it is desirable to re-size solids into smaller pieces (e.g., beans, egg salad).

Accordingly, the apparatus components have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

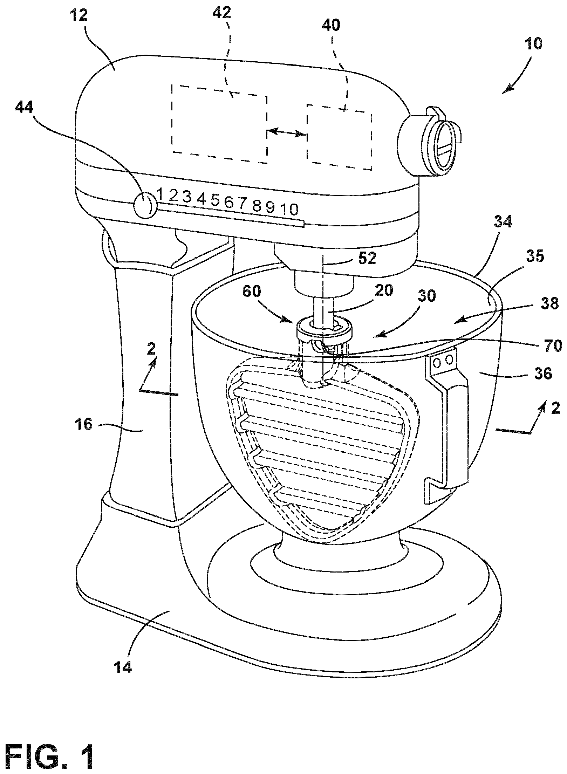

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point. In some aspects, the term "about" may encompass values within ± 10%, ± 5%, or ± 1% of a specified value.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a . . . " does not, without more constraints, preclude the existence of additional identical elements in the process, method, article, or apparatus that comprises the element.

Referring to FIGS. 1-5, reference numeral 10 generally designates a mixing appliance in the form of a stand mixer. The stand mixer 10 can include a mixer head 12 supported above a base 14 by a pedestal 16. The mixer head 12 includes a drive shaft 20 that is configured to operably couple with a mixing beater 30. A bowl 34 includes an inner surface 35, a side wall 36, and a bottom wall 37 that at least partially defines a mixing chamber 38. The bowl 34 can be configured to be received below the drive shaft 20 such that the mixing beater 30 can be received within the mixing chamber 38. While the stand mixer 10 is illustrated as a tilt head appliance in which the mixer head 12 is able to tilt into position over the bowl 34 and to tilt at an angle away from the bowl 34, it is understood that the stand mixer 10 can be a bowl lift appliance in which the bowl 34 is moved up and down relative to the mixer head 12 to bring the bowl 34 into and out of position for mixing.

The stand mixer 10 can include a motor 40 configured to drive the mixing beater 30 through the drive shaft 20 based upon an output signal received from a controller 42. The controller 42 can be communicably coupled with a user interface 44 to allow a user of the stand mixer 10 to control the operation of the stand mixer 10. The user interface 44 can be any suitable type of mechanical or digital interface. For example, as illustrated in FIG. 1, the user interface 44 can be in the form of a sliding control knob that can be moved along a graduated scale to control the drive shaft 20 and thus control a speed of the mixing beater 30. In another example, the user interface 44 can be a digital interface that allows a user to provide input to the controller 42 for controlling the motor 40 to drive the drive shaft 20 and thus drive movement of the mixing beater 30. In some embodiments, the motor 40 is configured to drive the mixing beater 30 through a planetary gear system that moves the mixing beater 30 (via the drive shaft 20) around a rotation axis 50 of a sun gear, and also rotates the mixing beater 30 around a rotation axis 52 (via the drive shaft 20). Other gear systems for moving the mixing beater 30 about its own axis and/or relative to the bowl 34 can also be utilized without deviating from the scope of the present disclosure.

The mixing beater 30 can include a collar 60 that is configured to removably couple the mixing beater 30 with the drive shaft 20. The collar 60 can include a central shaft 62 defining a central bore 64 configured to receive a portion of the drive shaft 20 therein. The central shaft 62 can further include a slot 66 configured to receive a locking pin 70 carried by the drive shaft 20 (FIG. 1) for releasably securing the mixing beater 30 on the end of the drive shaft 20. The mixing beater 30 and drive shaft 20 can be configured such that the rotation axis 52 extends through the central shaft 62 of the mixing beater 30.

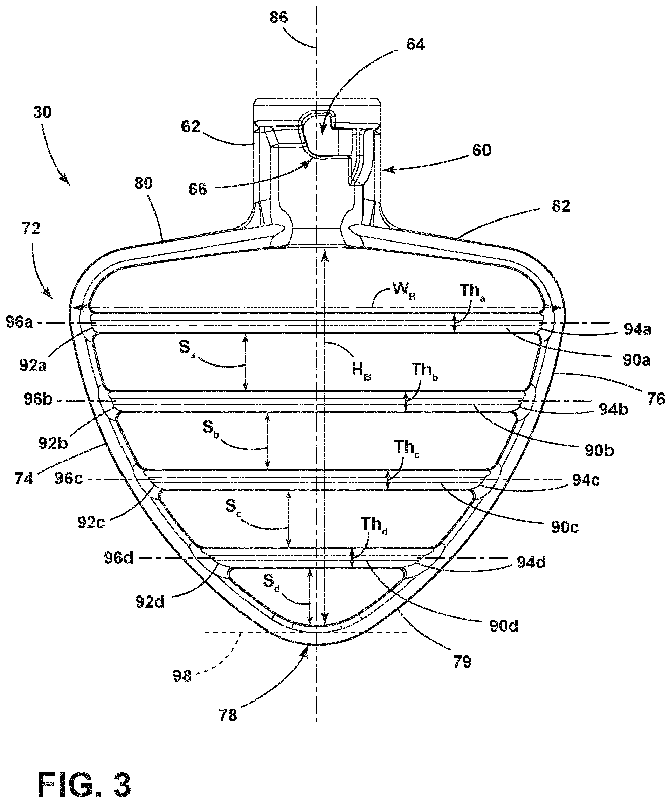

Referring to FIGS. 3-6, the mixing beater 30 includes a frame 72 coupled with a proximal end of the collar 60. The frame 72 can include a pair of opposing first and second arms 74 and 76. The first and second arms 74, 76 can be coupled together at respective distal ends by a frame tip 78. The first and second arms 74, 76 and the frame tip 78 together at least partially define a circumferential edge 79 of the mixing beater 30. The first and second arms 74, 76 can be coupled with the collar 60 at respective proximal ends by a first frame branch 80 and a second frame branch 82, respectively. The frame 72 can be generally symmetric about a central axis 86 of the mixing beater 30 that extends through the frame tip 78 and between the first and second arms 74, 76, and optionally extends through the central shaft 62 of the collar 60.

The mixing beater 30 includes a plurality of ribs 90a, 90b, 90c, and 90d extending between the first arm 74 and the second arm 76. Individual ribs 90 have been labeled with the reference suffix "a," "b," "c," etc... for the sake of distinguishing individual ribs 90 for the sake of discussion. As used herein, the suffix "a," "b," "c," etc... may be used to distinguish individual elements of a group of elements, such as, for example, the individual ribs 90a-d and their corresponding features and the suffix may be left off when distinguishing individual members of a group is not necessary for an understanding of the aspects of the present disclosure. However, it is understood that the reference numeral 90 may be used to refer to individual ribs and/or groups of ribs when differentiation between individual ribs 90 is not necessary for a complete understanding of aspects of the present disclosure. While aspects of the present disclosure are discussed in the context of a mixing beater 30 having four ribs 90a-90d, the mixing beater 30 can have fewer or greater ribs 90, exemplary embodiments of which are discussed herein.

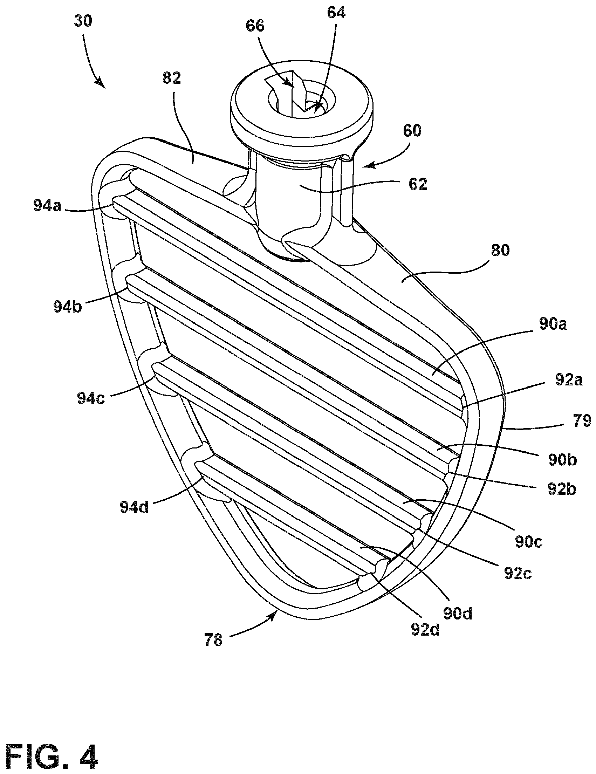

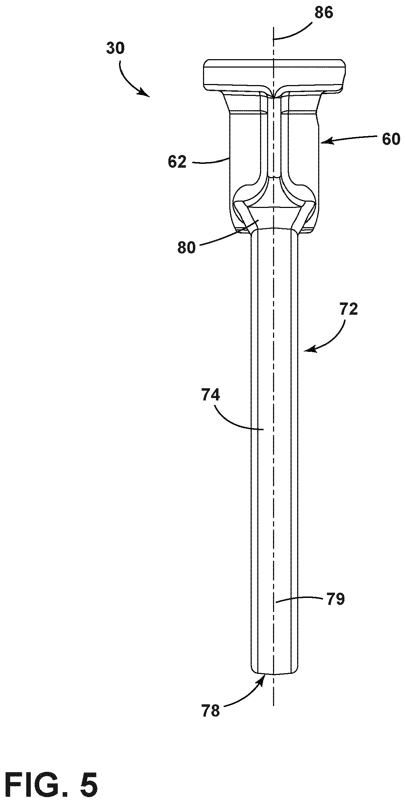

Each rib 90a-90d is connected with the first arm 74 at a respective first end 92a-92d and connected with the second arm 76 at a respective second end 94a-94d and extends between the first arm 74 and the second arm 76 along a horizontal plane. Each horizontal plane extends through a respective central axis 96a-96d of each rib 90a-90d between the respective first and second ends 92a-92d and 94a-94d and is orthogonal to the mixing beater central axis 86. In other words, each rib 90a-90b extends between the first arm 74 and the second arm 76 along the horizontal plane extending through the respective rib central axis 96a-96d, without deviation from the horizontal plane in either the lateral or transverse direction. As can best be seen in FIGS. 4 and 5, each rib 90a-90d extends without deviation between the first and second arms 74, 76 along a vertical plane that is aligned with the central axis 86 and extends through the first arm 74, frame tip 78, and the second arm 76.

Each of the ribs 90 can have a thickness Th that is the same or different than the thickness Th of one or more of the other ribs 90. For example, the rib 90a can have a thickness Thₐ, the adjacent rib 90b can have a thickness Th_{b}, the next adjacent rib 90c can have a thickness Th_{c}, and the next adjacent rib 90d can have a thickness Th_{d}, and so on. The thickness Thₐ-Th_{d} of the respective ribs 90a-90d can all be the same or one or more of the thicknesses Thₐ-Th_{d} can be different than one or more of the other thicknesses Thₐ-Th_{d}. Each rib 90 can have a thickness Th and be distanced from an adjacent rib 90, as measured between the central axis 96 of adjacent ribs 90, to define a predetermined gap or open space S. The last or bottom rib 90, with respect to the frame tip 78, can have a thickness Th and be spaced from the frame tip 78, as measured between the central axis 96 of the last rib 90 and a central axis 98 of the frame tip 78, to define the last or bottom open space S (i.e., the space S adjacent to the portion of the frame 72 defining the frame tip 78). For example, rib 90a can have a thickness Thₐ and be spaced from the adjacent rib 90b, as measured between the central axis 96a of rib 90a and the central axis 96b of the rib 90b, to define an open space Sₐ. The rib 90b can have a thickness Th_{b} and be spaced from the adjacent rib 90c, as measured between the central axis 96b of rib 90b and the central axis 96c of rib 90c, to define an open space S_{b}. The rib 90c can have a thickness Th_{c} and be spaced from the adjacent rib 90d, as measured between the central axis 96c of rib 90c and the central axis 96d of rib 90d, to define an open space S_{c}. The rib 90d can have a thickness Th_{d} and be spaced from the frame tip 78, as measured between the central axis 96d of rib 90d and the central axis 98 of the frame tip 78, to define an open space S_{d}. In some embodiments, the predetermined spaces Sₐ, S_{b}, S_{c}, and S_{d} between adjacent ribs 90a and 90b, between adjacent ribs 90b and 90c, between adjacent ribs 90c and 90d, and between the last rib 90d and the frame tip 78, respectively, can be based at least in part on facilitating the formation of small pieces of solid fats (e.g., butter and shortening) into a dough during a mixing process, such as is desirable when making a pastry or pie crust dough.

Without wishing to be limited by any particular theory, it is believed that the spaced horizontal ribs 90 of the mixing beater 30 of the present disclosure inhibit large pieces of butter or shortening from passing through the mixing beater 30 and instead forces the large pieces to the periphery of the frame 72 where the large pieces are re-sized between the circumferential edge 79 of the mixing beater frame 72 and the inner surface 35 of the bowl 34 (e.g., by being pinched). In this manner, the mixing beater 30 of the present disclosure facilitates re-shaping the butter or shortening into the smaller pieces that are traditionally desirable for forming a pastry or pie crust dough in a shorter amount of time than a conventional flat beater. Decreasing the amount of time required to re-size the butter or shortening decreases the likelihood that the dough becomes overworked, which can result in butter/shortening pieces that are too small and/or increase the development of gluten in the dough, which is traditionally believed to result in a pastry or pie crust that is tough and chewy rather than light and flaky.

According to some aspects of the present disclosure, each rib 90 can be distanced from an adjacent rib 90, as measured between the central axes 96 of adjacent ribs 90 (or, in the case of the last rib 90, as measured between the central axis 96 of the last rib 90 and the central axis 98 of the frame tip 78), to define a predetermined gap or space S between adjacent ribs 90 of from about 8 mm to about 20 mm. The distance between the central axis 96 of each rib 90 and between the central axis 96 of the last rib and the central axis 98 of the frame tip 78 can be selected in concert with the thickness Th of each respective rib 90 to provide the desired space or gap S between each adjacent ribs 90 and between the last rib 90 and the frame tip 78. For example, in some aspects, the space S between each adjacent ribs 90 and between the last rib 90 and the frame tip 78 can be from about 8 mm to about 20 mm, about 8 mm to about 18 mm, about 8 mm to about 17 mm, about 8 mm to about 16 mm, about 8 mm to about 15 mm, about 8 mm to about 13 mm, about 8 mm to about 12 mm, about 8 mm to about 10 mm, about 8 mm to about 9 mm, about 9 mm to about 20 mm, about 9 mm to about 18 mm, about 9 mm to about 17 mm, about 9 mm to about 16 mm, about 9 mm to about 15 mm, about 9 mm to about 13 mm, about 9 mm to about 12 mm, about 9 mm to about 10 mm, about 10 mm to about 20 mm, about 10 mm to about 18 mm, about 10 mm to about 17 mm, about 10 mm to about 16 mm, about 10 mm to about 15 mm, about 10 mm to about 13 mm, about 10 mm to about 12 mm, about 12 mm to about 20 mm, about 12 mm to about 18 mm, about 12 mm to about 17 mm, about 12 mm to about 16 mm, about 12 mm to about 15 mm, about 12 mm to about 13 mm, about 13 mm to about 20 mm, about 13 mm to about 18 mm, about 13 mm to about 17 mm, about 13 mm to about 16 mm, about 13 mm to about 15 mm, about 15 mm to about 20 mm, about 15 mm to about 18 mm, about 15 mm to about 17 mm, about 15 mm to about 16 mm, about 16 mm to about 20 mm, about 16 mm to about 18 mm, or about 18 mm to about 20 mm. In some examples, the space S between each adjacent ribs 90 and between the last rib 90 and the frame tip 78 can be about 8 mm, about 9 mm, about 10 mm, about 11 mm, about 12 mm, about 13 mm, about 14 mm, about 15 mm, about 16 mm, about 17 mm, about 18 mm, about 19 mm, about 20 mm, or any distance between these values. In some aspects, each space S between adjacent ribs 90 and between the last rib 90 and the frame tip 78 can be the same. In some other aspects, one or more of the spaces S can be different than one or more of the other spaces S.

According to some aspects of the present disclosure, the ribs 90 can have a thickness Th of from about 2.5 mm to about 6 mm. In some aspects, the ribs 90 can have a thickness Th of from about 2.5 mm to about 6.0 mm, about 2.5 mm to about 5.8 mm, about 2.5 mm to about 5.6 mm, about 2.5 mm to about 5.5 mm, about 2.5 mm to about 5.3 mm, about 2.5 mm to about 5.1 mm, about 2.5 mm to about 5.0 mm, about 2.5 mm to about 4.8 mm, about 2.5 mm to about 4.6 mm, about 2.5 mm to about 4.5 mm, about 2.5 mm to about 4.3 mm, about 2.5 mm to about 4.0 mm, about 2.5 mm to about 3.8 mm, about 2.5 mm to about 3.6 mm, about 2.5 mm to about 3.5 mm, about 2.5 mm to about 3.2 mm, about 2.5 mm to about 3.0 mm, about 2.5 mm to about 2.8 mm, about 2.8 mm to about 6.0 mm, about 2.8 mm to about 5.8 mm, about 2.8 mm to about 5.6 mm, about 2.8 mm to about 5.5 mm, about 2.8 mm to about 5.3 mm, about 2.8 mm to about 5.1 mm, about 2.8 mm to about 5.0 mm, about 2.8 mm to about 4.8 mm, about 2.8 mm to about 4.6 mm, about 2.8 mm to about 4.5 mm, about 2.8 mm to about 4.3 mm, about 2.8 mm to about 4.0 mm, about 2.8 mm to about 3.8 mm, about 2.8 mm to about 3.6 mm, about 2.8 mm to about 3.5 mm, about 2.8 mm to about 3.2 mm, about 2.8 mm to about 3.0 mm, about 3.0 mm to about 6.0 mm, about 3.0 mm to about 5.8 mm, about 3.0 mm to about 5.6 mm, about 3.0 mm to about 5.5 mm, about 3.0 mm to about 5.3 mm, about 3.0 mm to about 5.1 mm, about 3.0 mm to about 5.0 mm, about 3.0 mm to about 4.8 mm, about 3.0 mm to about 4.6 mm, about 3.0 mm to about 4.5 mm, about 3.0 mm to about 4.3 mm, about 3.0 mm to about 4.0 mm, about 3.0 mm to about 3.8 mm, about 3.0 mm to about 3.6 mm, about 3.0 mm to about 3.5 mm, about 3.0 mm to about 3.2 mm, about 3.2 mm to about 6.0 mm, about 3.2 mm to about 5.8 mm, about 3.2 mm to about 5.6 mm, about 3.2 mm to about 5.5 mm, about 3.2 mm to about 5.3 mm, about 3.2 mm to about 5.1 mm, about 3.2 mm to about 5.0 mm, about 3.2 mm to about 4.8 mm, about 3.2 mm to about 4.6 mm, about 3.2 mm to about 4.5 mm, about 3.2 mm to about 4.3 mm, about 3.2 mm to about 4.0 mm, about 3.2 mm to about 3.8 mm, about 3.2 mm to about 3.6 mm, about 3.5 mm to about 6.0 mm, about 3.5 mm to about 5.8 mm, about 3.5 mm to about 5.6 mm, about 3.5 mm to about 5.5 mm, about 3.5 mm to about 5.3 mm, about 3.5 mm to about 5.1 mm, about 3.5 mm to about 5.0 mm, about 3.5 mm to about 4.8 mm, about 3.5 mm to about 4.6 mm, about 3.5 mm to about 4.5 mm, about 3.5 mm to about 4.3 mm, about 3.5 mm to about 4.0 mm, about 3.5 mm to about 3.8 mm, about 3.8 mm to about 6.0 mm, about 3.8 mm to about 5.8 mm, about 3.8 mm to about 5.6 mm, about 3.8 mm to about 5.5 mm, about 3.8 mm to about 5.3 mm, about 3.8 mm to about 5.1 mm, about 3.8 mm to about 5.0 mm, about 3.8 mm to about 4.8 mm, about 3.8 mm to about 4.6 mm, about 3.8 mm to about 4.5 mm, about 3.8 mm to about 4.3 mm, about 3.8 mm to about 4.0 mm, about 4.0 mm to about 6.0 mm, about 4.0 mm to about 5.8 mm, about 4.0 mm to about 5.6 mm, about 4.0 mm to about 5.5 mm, about 4.0 mm to about 5.3 mm, about 4.0 mm to about 5.1 mm, about 4.0 mm to about 5.0 mm, about 4.0 mm to about 4.8 mm, about 4.0 mm to about 4.6 mm, about 4.0 mm to about 4.5 mm, about 4.0 mm to about 4.3 mm, about 4.3 mm to about 6.0 mm, about 4.3 mm to about 5.8 mm, about 4.3 mm to about 5.6 mm, about 4.3 mm to about 5.5 mm, about 4.3 mm to about 5.3 mm, about 4.3 mm to about 5.1 mm, about 4.3 mm to about 5.0 mm, about 4.3 mm to about 4.8 mm, about 4.3 mm to about 4.6 mm, about 4.3 mm to about 4.5 mm, about 4.5 mm to about 6.0 mm, about 4.5 mm to about 5.8 mm, about 4.5 mm to about 5.6 mm, about 4.5 mm to about 5.5 mm, about 4.5 mm to about 5.3 mm, about 4.5 mm to about 5.1 mm, about 4.5 mm to about 5.0 mm, about 4.5 mm to about 4.8 mm, about 4.5 mm to about 4.6 mm, about 4.8 mm to about 6.0 mm, about 4.8 mm to about 5.8 mm, about 4.8 mm to about 5.6 mm, about 4.8 mm to about 5.5 mm, about 4.8 mm to about 5.3 mm, about 4.8 mm to about 5.1 mm, about 4.8 mm to about 5.0 mm, about 5.0 mm to about 6.0 mm, about 5.0 mm to about 5.8 mm, about 5.0 mm to about 5.6 mm, about 5.0 mm to about 5.5 mm, about 5.0 mm to about 5.3 mm, about 5.0 mm to about 5.1 mm, about 5.3 mm to about 6.0 mm, about 5.3 mm to about 5.8 mm, about 5.3 mm to about 5.6 mm, about 5.3 mm to about 5.5 mm, or about 5.5 mm to about 6.0 mm. For example, the ribs can have a thickness Th of about 2.5 mm, about 2.7 mm, about 2.8 mm, about 3.0 mm, about 3.1 mm, about 3.2 mm, about 3.3 mm, about 3.5 mm, about 3.7 mm, about 3.8 mm, about 4.0 mm, about 4.1 mm, about 4.2 mm, about 4.3 mm, about 4.5 mm, about 4.8 mm, about 5.0 mm, about 5.1 mm, about 5.2 mm, about 5.3 mm, about 5.5 mm, about 5.7 mm, about 5.8 mm, about 6.0 mm, or any thickness between these values. In some aspects, each individual rib 90 can have the same thickness Th or one or more of the ribs 90 can have a thickness Th that is different than the thickness Th of one or more of the other of the ribs 90. In some aspects of the present disclosure, the thickness Th of the ribs 90 is configured to facilitate movement of solid material during a mixing process, such as solid baking fats in the process of mixing a pastry or pie crust dough, to the periphery of the frame 72 where the solid material can be re-sized by being pinched between the circumferential edge 79 of the frame 72 and one or more adjacent portions of the inner surface 35 of the bowl 34, rather than directly cutting into the solid material with the ribs 90 to form smaller pieces.

The ribs 90 can have any suitable cross-sectional shape to facilitate incorporation of solid baking fats (e.g., butter and shortening) into the dough during a mixing process. The cross-sectional shape of each rib 90 can be a regular or irregular geometric shape and can be symmetric or asymmetric with respect to the rib central axis 96. Non-limiting examples of cross-sectional shapes include rectangular, diamond, circular, oval, hexagonal, triangular, square, pentagonal, etc. In some aspects, the ribs 90 can have a symmetric or non-symmetric cross-sectional shape having a ratio of the width dimension W to the thickness dimension Th (W:Th) that is greater than or equal to 1 (W:Th ≥ 1). In some other aspects, the ribs 90 can have a symmetric or non-symmetric cross-sectional shape having a ratio of the width dimension W to the thickness dimension Th (W:Th) that is greater than or equal to 1 and less than or equal to 3 (1 ≤ W:Th ≤ 3). ). In some other aspects, the ribs 90 can have a symmetric or non-symmetric cross-sectional shape having a ratio of the width dimension W to the thickness dimension Th

(W:Th) that is greater than or equal to 1 and less than or equal to 2.5 (1 ≤ W:Th ≤ 2.5). In some other aspects, the ribs 90 can have a symmetric or non-symmetric cross-sectional shape having a ratio of a width dimension W to the thickness dimension Th (W:Th) that is greater than or equal to 1 and less than or equal to 2 (1 ≤ W:Th ≤ 2). The cross-sectional shape of the ribs 90 can include rounded corners and/or edges that can be based at least in part on a desired interaction between the solid fats and the rib 90 during a mixing process and/or based on tolerances associated with the molds used to form the mixing beater 30.

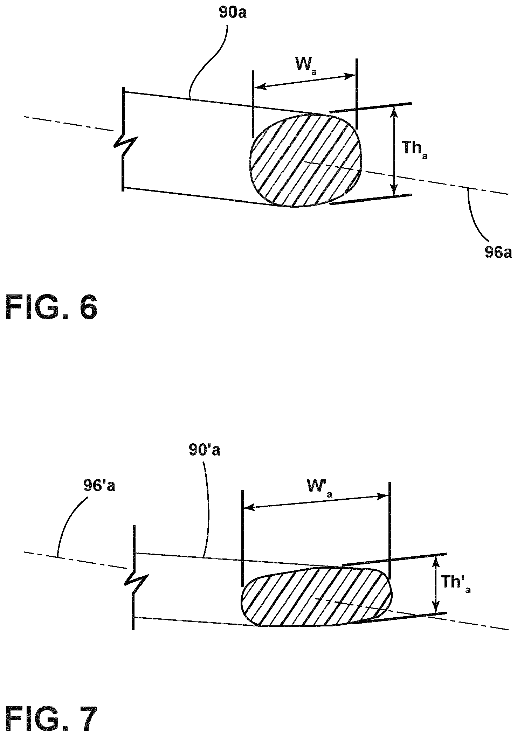

FIGS. 6-8 illustrate exemplary cross-sectional shapes for the ribs 90. While the exemplary cross-sectional shapes are discussed with respect to the rib 90a, it is understood that the exemplary cross-sectional shapes can be applied to any of the ribs 90a-90d of the exemplary mixing beater 30 of FIG. 3. FIG. 6 illustrates an exemplary rib 90a having a rectangular cross-sectional shape with rounded corners. As illustrated in FIG. 6, the rib 90a is symmetrical laterally with respect to the central axis 96a (in the width dimension Wₐ) and is also symmetrical transversely with respect to the central axis 96a (in the thickness dimension Thₐ). In some aspects, the rib 90a may be asymmetrical laterally and/or transversely. In the example of FIG. 6, the rib 90a has a width dimension Wₐ that is greater than the thickness dimension Thₐ, such that a ratio of the width dimension Wₐ to the thickness dimension Thₐ is greater than or equal to 1 and less than or equal to 2 (1 ≤ Wₐ:Thₐ ≤ 2). In other examples, the width dimension Wₐ may be the same as the thickness dimension Thₐ (Wₐ:Thₐ = 1) or smaller than the thickness dimension Thₐ (1 ≥ Wₐ:Thₐ). Exemplary dimensions for the rib 90a of FIG. 6 include a width dimension Wₐ of about 7.6 mm and a thickness dimension Thₐ of about 5.3 mm.

FIG. 7 illustrates another exemplary rib cross-sectional shape, labeled 90'a, which is similar to the exemplary rib 90a except for the cross-sectional shape of the rib. The rib 90'a has an elongated rectangular cross-sectional shape with rounded edges and has a width dimension W'ₐ to thickness dimension Th'ₐ ratio (W'ₐ:Th'ₐ) that is greater than 2. In some examples, the rib 90'a has a ratio W'ₐ:Th'ₐ of greater than 2, greater than 2.2, greater than 2.3, or greater than 2.5. In some other examples, the rib 90'a has a ratio W'ₐ:Th'ₐ of greater than or equal to 1 and less than or equal to 3 (1 ≤ W'ₐ:Th'ₐ ≤ 3), greater than or equal to 2 and less than or equal to 3 (2 ≤ W'a:Th'a ≤ 3), or greater than or equal to 2 and less than or equal to 2.5 (2 ≤ W'a:Th'a ≤ 2.5). As illustrated in FIG. 7, the rib 90'a is symmetrical laterally with respect to the central axis 96'a (in the width dimension W'ₐ) and is also symmetrical transversely with respect to the central axis 96'a (in the thickness dimension Th'ₐ). In some aspects, the rib 90'a may be asymmetrical laterally and/or transversely. Exemplary dimensions for the rib 90'a of FIG. 7 include a width dimension W'ₐ of about 7.6 mm and a thickness dimension Th'ₐ of about 3 mm.

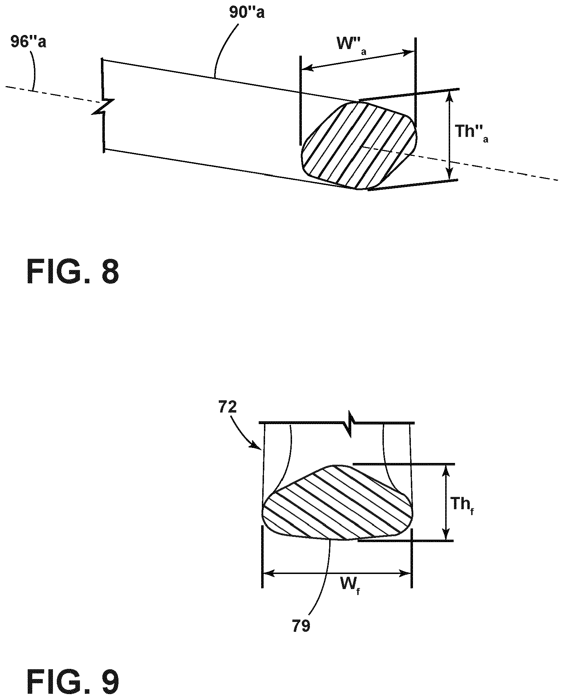

FIG. 8 illustrates another exemplary rib cross-sectional shape, labeled 90"a, which is similar to the exemplary rib 90a except for the cross-sectional shape of the rib. The rib 90"a has a diamond cross-sectional shape with rounded edges and has a width dimension W"ₐ to thickness dimension Thʺₐ ratio (Wʺₐ:Thʺₐ) that is greater than or equal to 1. In the example of FIG. 8, the rib 90"a has a width dimension W"ₐ and a thickness dimension Th"ₐ such that ratio Wʺₐ:Thʺₐ is greater than or equal to 1 and less than or equal to 3 (1 ≤ Wʺₐ:Thʺₐ ≤ 3) or greater than or equal to 1 and less than or equal to 2 (1 ≤ Wʺₐ:Thʺₐ ≤ 2). In other examples, the width dimension W"ₐ may be the same as the thickness dimension Th"ₐ (Wʺₐ:Thʺₐ = 1) or smaller than the thickness dimension Th"ₐ (1 ≥ Wʺₐ:Thʺₐ). As illustrated in FIG. 8, the rib 90"a is symmetrical laterally with respect to the central axis 96"a (in the width dimension W"ₐ) and is also symmetrical transversely with respect to the central axis 96"a (in the thickness dimension Thʺₐ). In some aspects, the rib 90"a may be asymmetrical laterally and/or transversely. Exemplary dimensions for the rib 90"a of FIG. 8 include a width dimension W"ₐ of about 7.6 mm and a thickness dimension Thʺₐ of about 5.3 mm.

The frame 72 can have any suitable cross-sectional shape to facilitate incorporation of the butter or other fats into the dough during a mixing process. The cross-sectional shape of the frame 72 can be a regular or irregular geometric shape and can be symmetric or asymmetric with respect to a central axis of the frame. FIG. 9 illustrates an exemplary cross-sectional shape for the frame 72, including the first and second arms 74 and 76 and the frame tip 78. The frame 72 can have a geometric stadium cross-sectional shape along a width dimension W_{f} that extends transversely with respect to the frame 72 and which includes an inner sidewall drawn into a peak in a thickness dimension Th_{f}. In some examples, the frame 72 can include an outer sidewall drawn into a peak or both the inner and outer sidewalls can be drawn into a peak. The frame 72 can have any suitable thickness Th_{f} and width W_{f}, which may be based at least in part on the size of the frame 72. In some examples, the frame 72 can have a thickness Th_{f} of from about 5 mm to about 8 mm. For example, the frame 72 can have a thickness Th_{f} of from about 5 mm to about 8 mm, about 5 mm to about 7.5 mm, about 5 mm to about 7 mm, about 5 mm to about 6.5 mm, about 5 mm to about 6 mm, about 5.5 mm to about 8 mm, about 5.5 mm to about 7.5 mm, about 5.5 mm to about 7 mm, about 5.5 mm to about 6.5 mm, about 5.5 mm to about 6 mm, about 6 mm to about 8 mm, about 6 mm to about 7.5 mm, about 6 mm to about 7 mm, about 6 mm to about 6.5 mm, about 6.5 mm to about 8 mm, about 6.5 mm to about 7.5 mm, about 6.5 mm to about 7 mm, or about 7 mm to about 8 mm. In some examples, the frame 72 can have a width W_{f} of about 5 mm, about 5.5 mm, about 6 mm, about 6.5 mm, about 7 mm, about 7.5 mm, about 8 mm, or any thickness between these values.

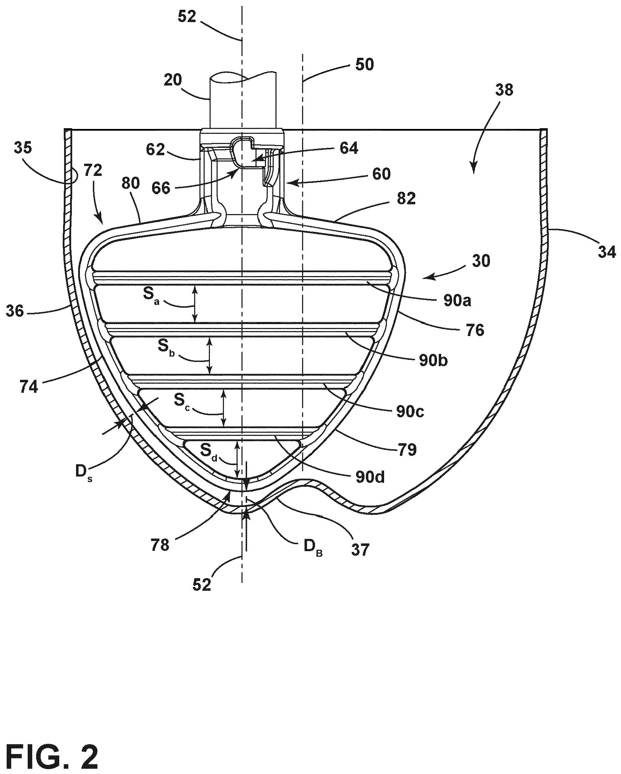

The dimensions of the mixing beater 30 and the shape defined by the circumferential edge 79 of the frame 72 can be based at least in part on the shape and dimensions of the bowl 34 for which the mixing beater 30 is intended for use. With reference to FIG. 2, the shape and dimensions of the frame 72 can be selected in concert with the shape and dimensions of the inner surface 35 of the bowl 34 such that during movement of the mixing beater 30 during a mixing process, a predetermined distance is maintained between at least portions of the circumferential edge 79 of the frame 72 and the adjacent inner surface 35 of the bowl 34. In some aspects, the mixing beater 30 and bowl 34 can be configured such that a predetermined distance Ds is maintained between at least a portion of the circumferential edge 79 of the frame 72 along the first and/or second arms 74, 76 and the adjacent inner surface 35, generally corresponding to the side wall 36 of the bowl 34, during at least a portion of the rotation of the mixing beater 30 in operation. In some aspects, the mixing beater 30 and bowl 34 can be configured such that a predetermined distance D_{B} is maintained between at least a portion of the circumferential edge 79 of the frame 72 along the frame tip 78 and the adjacent inner surface 35, generally corresponding to the bottom wall 37 of the bowl 34, during at least a portion of the rotation of the mixing beater 30 in operation. In some aspects, the distance Ds may be so small as to effectively prohibit re-shaping of large pieces of solids between the side wall 36 and the circumferential edge 79 along the first and/or second arms 74, 76, such that essentially all of the re-shaping of the large pieces occurs as the solids are forced through the space D_{B} between the circumferential edge 79 along the frame tip 78 and the bottom wall of the bowl 34. In other aspects, the distance D_{B} may be so small as to effectively prohibit re-shaping of large pieces of solids between the bottom wall 37 and the circumferential edge 79 along the frame tip 78, such that essentially all of the re-shaping of the large pieces occurs as the solids are forced through the space Ds between the circumferential edge 79 along the first and/or second arms 74, 76 and the side wall 36 of the bowl 34. In still other aspects, the distances D_{S} and D_{B} may both be sufficient to facilitate re-shaping of the large pieces of butter/shortening during a mixing process. The distances D_{S} and D_{B} may both be the same or different.

In some aspects, the distances D_{S} and/or D_{B} can have a length of from about 9 mm to about 12 mm. For example, the distances D_{S} and/or D_{B} can have a length of from about 9 mm to about 12 mm, about 9.5 mm to about 12 mm, about 10 mm to about 12 mm, about 10.5 mm to about 12 mm, about 11 mm to about 12 mm, about 11.5 mm to about 12 mm, about 9 mm to about 11.5 mm, about 9.5 mm to about 11.5 mm, about 10 mm to about 11.5 mm, about 10.5 mm to about 11.5 mm, about 11 mm to about 11.5 mm, about 9 mm to about 11 mm, about 9.5 mm to about 11 mm, about 10 mm to about 11 mm, about 10.5 mm to about 11 mm, about 9 mm to about 10.5 mm, about 9.5 mm to about 10.5 mm, about 10 mm to about 10.5 mm, or about 9 mm to about 10 mm. In some examples, the distances D_{S} and/or D_{B} can have a length of about 9 mm, about 9.5 mm, about 10 mm, about 10.5 mm, about 11 mm, about 11.5 mm, about 12 mm, or any distance between these values. The distances D_{S} and D_{B} may be the same or different.

The number of ribs 90, the rib thickness, the cross-sectional shape of the ribs 90, and/or the space S between adjacent ribs 90 can be selected in concert based on the dimensions of the mixing beater 30 to provide the desired mixing performance. In some aspects of the present disclosure, the mixing beater 30 can have a width W_{B} and an interior beater height H_{B} based at least in part on the dimensions of the bowl 34 for which the mixing beater 30 is intended for use. The number of ribs 90 and the rib thickness can be selected to provide a predetermined space S between adjacent ribs 90, as described above. In one example, the exemplary mixing beater 30 of FIG. 3 can have a width W_{B} of about 137.6 mm and an interior beater height H_{B} of about 105.5 mm, which may be suitable for use in a conventional 5-quart bowl. In this example, the thickness Th_{a-d} of each of the four ribs 90a-90d can be about 5.3 mm to provide a space Sₐ-S_{d} between adjacent ribs (and between the last rib 90d and the frame tip 78) of about 16 mm. In other examples, the number of ribs 90 and/or the thickness of each rib 90 can be selected to provide a smaller or larger space S between adjacent ribs 90. For example, the rib thickness can be increased to decrease the size of the space S between adjacent ribs; in other examples, decreasing the rib thickness can result in an increase in the size of the space S between adjacent ribs 90. In another example, the number of ribs 90 can be increased or decreased to decrease or increase the space S between adjacent ribs 90, respectively.

The mixing beater 30 can be made from any suitable polymeric, metal, powdered metal, or metal alloy material using any suitable manufacturing process. For example, the mixing beater 30 can be made from aluminum or stainless steel. In some examples, the mixing beater 30 can be powder coated or have a polished finish. In some examples, the mixing beater 30 can be formed in a die cast or investment cast process. For example, the mixing beater 30 can be made from an aluminum material using die cast process and then finished with a powder coat. In another example, the mixing beater 30 can be made from a stainless steel material in an investment cast process and polished after forming.

With reference again to FIGS. 1-2, in use during a mixing process, such as a process to mix the ingredients to make a pastry or pie crust dough, the stand mixer 10 can be operated by a user through the user interface 44 to control the movement of the mixing beater 30 in the bowl 34. Conventional recipes for forming pastry or pie crust dough requires incorporating a solid fat, such as butter or shortening, into the dry dough ingredients (e.g., flour). The mixing beater 30 can be rotated about its rotation axis 52 by the drive shaft 20 and can also be rotated about the interior of the bowl 34 about the sun gear rotation axis 50. As the mixing beater 30 is rotated, large pieces of butter/shortening may come into contact with the ribs 90 and be inhibited from passing through spaces Sₐ-S_{d} between adjacent ribs 90, thus facilitating movement of the large pieces toward the periphery of the frame 72 where the large pieces can be re-sized by passing between the circumferential edge 79 of the mixing beater 30 and the adjacent inner surface 35 of the bowl 34. Without wishing to be limited by any particular theory, it is believed that when the mixing beater 30 is operated at the low speeds typically used in mixing dough, for example about 120 rpm to about 180 rpm, the ribs 90 have a shape and dimensions such that the ribs 90 will generally not have enough energy to cut or split the large pieces of butter/shortening, but instead facilitate their movement to the periphery of the frame 72 where the pieces can be re-sized by being forced between the circumferential edge 79 and the inner surface 35 of the bowl 34. This is a different process for incorporating butter/shortening into a dough than that of a conventional pastry cutter. The shape and dimensions of the mixing beater 30 can be selected in concert with the shape and dimensions of the bowl 34 to provide a gap between at least portions of the circumferential edge 79 of the frame 72 and the adjacent portions of the inner surface 35 of the bowl 34 that provides pieces of butter/shortening having the desired size (e.g., pea-sized or squashed pea-sized discs).

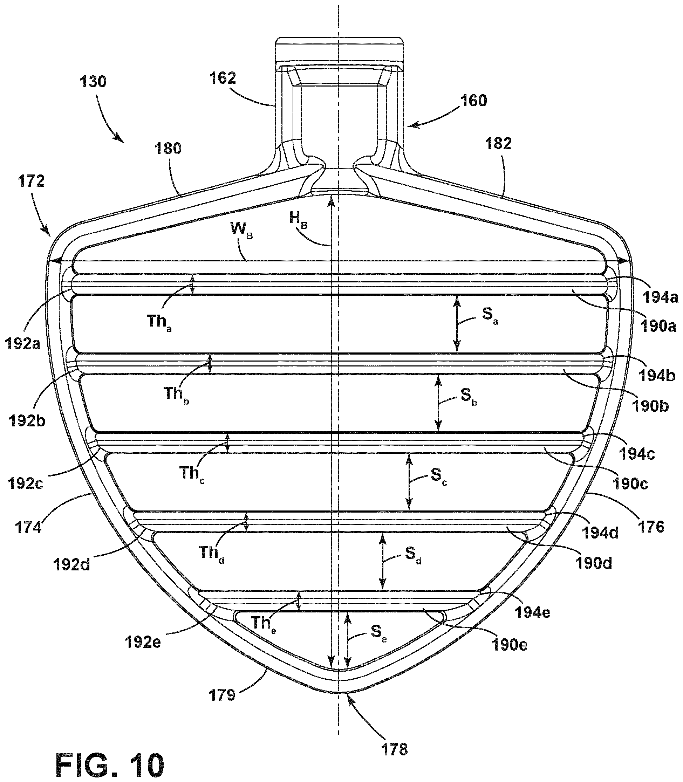

FIG. 10 illustrates an exemplary mixing beater 130 that is similar in some ways to the mixing beater 30, but differs in other ways, such as the number of ribs and the shape of the frame. Therefore, elements in the mixing beater 130 similar to those of the mixing beater 30 of FIGS. 1-5 are labeled with the prefix 100. The mixing beater 130 can have ribs 190a-190e having any suitable cross-sectional shape, as described above with respect to the mixing beater 30 and FIGS. 1-9. The mixing beater 130 is illustrated as having five ribs 190a-190e extending between the first and second arms 174, 176. In some aspects, the mixing beater 130 may include fewer or greater ribs 190. As discussed above with respect to the mixing beater 30, the number of ribs 190, the rib thickness, the cross-sectional shape of the ribs 190, and/or the open space S between adjacent ribs 190 can be selected in concert based on the dimensions of the mixing beater 130 to provide the desired mixing performance. For example, the number of ribs 190 and/or the thickness of the ribs 190 can be selected at least in part based on the interior height H_{B} of the mixing beater 130 to provide spaces Sₐ-Sₑ having the desired dimensions.

In one example, the exemplary mixing beater 130 of FIG. 10 can have a width W_{B} of about 162.4 mm and an interior beater height H_{B} of about 132.5 mm, which may be suitable for use in a conventional 7 quart bowl. In this example, the thickness Thₐ₋ₑ of each of the five ribs 190a-190e can be about 5.3 mm to provide a space Sₐ-Sₑ between adjacent ribs (and between the last rib 190e and the frame tip 178) of about 16 mm.

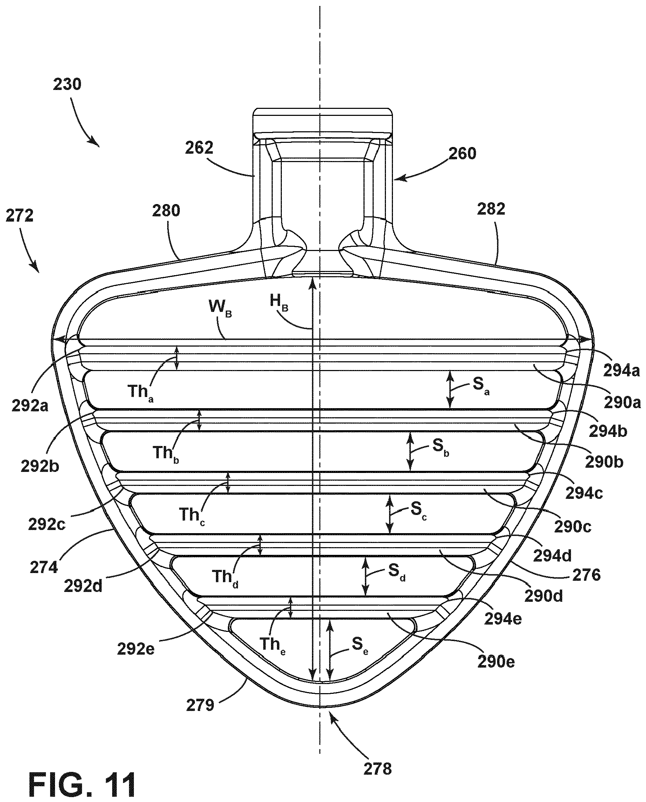

FIG. 11 illustrates an exemplary mixing beater 230 that is similar in some ways to the mixing beater 30, but differs in other ways, such as the number of ribs 290. Therefore, elements in the mixing beater 230 similar to those of the mixing beater 30 of FIGS. 1-9 are labeled with the prefix 200. The mixing beater 230 can have ribs 290a-290e having any suitable cross-sectional shape, as described above with respect to the mixing beater 30 and FIGS. 1-8. The mixing beater 230 is illustrated as having five ribs 290a-290e extending between the first and second arms 274, 276. In some aspects, the mixing beater 230 may include fewer or greater ribs 290. As discussed above with respect to the mixing beater 30, the number of ribs 290, the rib thickness, the cross-sectional shape of the ribs 290, and/or the open space S between adjacent ribs 290 can be selected in concert based on the dimensions of the mixing beater 230 to provide the desired mixing performance. For example, the number of ribs 290 and/or the thickness of the ribs 290 can be selected at least in part based on the interior height H_{B} of the mixing beater 230 to provide spaces Sₐ-Sₑ having the desired dimensions.

In one example, the exemplary mixing beater 230 of FIG. 11 can have a width W_{B} of about 137.6 mm and an interior beater height H_{B} of about 105.5 mm, which may be suitable for use in a conventional - quart bowl. In this example, the thickness Thₐ₋ₑ of each of the five ribs 290a-290e can be about 3 mm to provide a space Sₐ-Sₑ between adjacent ribs of about 10 mm. In this example, the space Sₑ between the last rib 290e and the frame tip 278 is about 12 mm. Thus, in this example, the spaces Sₐ-Sₑ do not all have the same height.

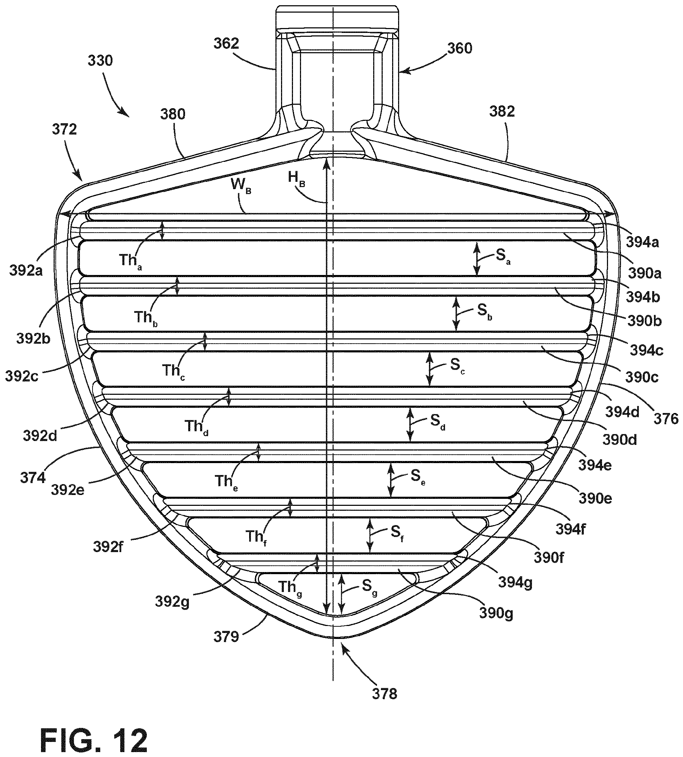

FIG. 12 illustrates an exemplary mixing beater 330 that is similar in some ways to the mixing beater 30 of FIGS. 1-9 and mixing beater 130 of FIG. 10, but differs in other ways, such as the number of ribs 390. Therefore, elements in the mixing beater 330 similar to those of the mixing beater 30 and mixing beater 130 are labeled with the prefix 300. The mixing beater 330 can have ribs 390a-390g having any suitable cross-sectional shape, as described above with respect to the mixing beater 30 and FIGS. 1-8. The mixing beater 330 is illustrated as having seven ribs 390a-390g extending between the first and second arms 374, 376. In some aspects, the mixing beater 330 may include fewer or greater ribs 390. As discussed above with respect to the mixing beater 30, the number of ribs 390, the rib thickness, the cross-sectional shape of the ribs 390, and/or the space S between adjacent ribs 390 can be selected in concert based on the dimensions of the mixing beater 330 to provide the desired mixing performance. For example, the number of ribs 390 and/or the thickness of the ribs 390 can be selected at least in part based on the interior height H_{B} of the mixing beater 330 to provide spaces Sₐ-S_{g} having the desired dimensions.

In one example, the exemplary mixing beater 330 of FIG. 12 can have a width W_{B} of about 162.4 mm and an interior beater height H_{B} of about 132.5 mm, which may be suitable for use in a conventional 7-quart bowl. In this example, the thickness Th_{a-g} of each of the seven ribs 390a-390g can be about 3 mm to provide a space Sₐ-S_{g} between adjacent ribs of about 10 mm. In this example, the space S_{g} between the last rib 390g and the frame tip 378 is about 12 mm. Thus, in this example, the spaces Sₐ-S_{g} do not all have the same height.

### EXAMPLE

The following example describes various features and advantages provided by the disclosure, and is in no way intended to limit the invention and appended claims.

The mixing performance of an exemplary mixing beater according to the present disclosure with a comparative flat beater was compared across several different food types. The mixing performance was evaluated by visually observing the results of the mixed product. The exemplary mixing beater according to the present disclosure was similar to that illustrated in FIG. 3. The comparative flat beater has a frame similar to that of the exemplary mixing beater of FIG. 3, but includes a central shaft extending from the mixing beater collar part way toward the frame tip with a first branch extending from the central shaft to the first arm and a second branch extending from the central shaft to the second arm.

For example, in recipes in which the formation of pea-sized chunks of a solid material is desirable (e.g., butter, mashed pinto beans), the exemplary mixing beater of the present disclosure was able to form chunks having the desired size at a faster rate (i.e., less mixing time) compared to the comparative flat beater. Less mixing time is particularly desirable when making doughs where the end product is desired to be light and flaky. The results demonstrate the ability of the exemplary mixing beater according to the present disclosure to quickly and efficiently re-size solid materials, such as butter and shortening, into small pieces having the desired size. The exemplary mixing beater is particularly useful in applications in which many small pieces are desired (e.g., pea-sized or squashed pea-size) and can also be used with other types of foods to provide an acceptable mixture. In another example, the exemplary mixing beater of the present disclosure performed superior to the comparative flat beater when preparing recipes that required pea-sized butter pieces without overmixing, such as with empanada crust dough. In yet another example, the exemplary mixing beater performed better in comparison to the flat beater with recipes that included items such as applesauce, mashed pinto beans, chunky jam, and egg salad, where medium chunks of food goods must be broken into small chunks of food goods.

The following non-limiting aspects are encompassed by the present disclosure. To the extent not already described, any one of the features of the following aspects may be combined in part or in whole with features of any one or more of the other aspects of the present disclosure to form additional aspects, even if such a combination is not explicitly described.

According to one aspect of the present disclosure, a mixing beater for a stand mixer includes a collar configured to removably couple the mixing beater with the stand mixer. A frame is coupled with the collar and includes a pair of opposing first and second arms. The first and second arms are coupled at their respective distal ends by a frame tip. A central axis of the mixing beater extends through the frame tip, between the opposing first and second arms. A plurality of ribs extends between the first and second arms. Each rib has a rib central axis that extends orthogonal to the central axis of the mixing beater and each of the plurality of ribs is spaced from an adjacent rib to define a space between adjacent ribs.

According to another aspect of the present disclosure, each of a plurality of ribs has a cross-sectional shape selected from at least one of a rectangular, diamond, circular, oval, hexagonal, triangular, square, and pentagonal cross-sectional shape.

According to another aspect, each of a plurality of ribs has a rib thickness of from about 2.5 mm to about 6 mm.

According to yet another aspect, a plurality of ribs comprises at least 4 ribs.

According to yet another aspect, a space between each adjacent rib of a plurality of ribs is the same.

According to yet another aspect, a space between adjacent ribs of a plurality of ribs is between about 8 mm to about 20 mm.

According to yet another aspect, a vertical plane is aligned with a central axis of a mixing beater and extends through first and second arms and a frame tip. A plurality of ribs is aligned with the vertical plane.

According to yet another aspect, a shape and dimension of a frame are configured to provide a predetermined distance between at least a portion of a circumferential edge of the frame and an adjacent portion of a bowl intended for use with a stand mixer.

According to another aspect, a mixing beater for coupling to a drive shaft of a stand mixer includes a collar configured to removably couple the mixing beater with the drive shaft of the stand mixer. A frame is coupled with the collar and includes a pair of opposing first and second arms that are coupled at their respective distal ends by a frame tip. A central axis of the mixing beater extends through the frame tip, between the opposing first and second arms. A plurality of ribs extends between the first and second arms. Each rib has a rib central axis that extends orthogonal to the central axis of the mixing beater. Each of the plurality of ribs has a width and a thickness and a ratio of the width to the thickness is greater than or equal to 1 and less than or equal to 3.

According to yet another aspect, each of a plurality of ribs is spaced from an adjacent rib to define a space between adjacent ribs.

According to another aspect of the present disclosure, a mixing beater for a stand mixer includes a collar configured to removably couple the mixing beater with the stand mixer. A frame is coupled with the collar and includes a pair of opposing first and second arms. The first and second arms are coupled at their respective distal ends by a frame tip. A central axis of the mixing beater extends through the frame tip, between the opposing first and second arms and a plurality of ribs extends between the first and second arms. Each rib has a rib central axis that extends orthogonal to the central axis of the mixing beater. A vertical plane is aligned with the central axis of the mixing beater and extends through the first and second arms and the frame tip. The plurality of ribs is aligned with the vertical plane. Each of the plurality of ribs has a width and a thickness, and a ratio of the width to the thickness is greater than or equal to 1 and less than or equal to 3.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A mixing beater (30, 130, 230, 330) for a stand mixer (10), comprising:
a collar (60, 160, 260, 360) configured to removably couple said mixing beater (30, 130, 230, 330) with said stand mixer (10);
a frame (72, 172, 272, 372) coupled with the collar (60, 160, 260, 360) and comprising a pair of opposing first and second arms (74, 174, 274, 374 and 76, 176, 276, 376), wherein the first and second arms (74, 174, 274, 374 and 76, 176, 276, 376) are coupled at their respective distal ends by a frame tip (78, 178, 278, 378), and wherein a central axis (86) of said mixing beater (30, 130, 230, 330) extends through the frame tip (78, 178, 278, 378), between the opposing first and second arms (74, 174, 274, 374 and 76, 176, 276, 376); and
a plurality of ribs (90, 90a-90d, 90'a, 90"a, 190, 190a-190e, 290, 290a-290e, 390, 390a-390g) extending between the first and second arms (74, 174, 274, 374 and 76, 176, 276, 376), wherein each rib (90, 90a-90d, 90'a, 90"a, 190, 190a-190e, 290, 290a-290e, 390, 390a-390g) has a rib central axis (96, 96a-96d, 96'a, 96"a) extending orthogonal to the central axis (86) of said mixing beater (30, 130, 230, 330), and wherein each of the plurality of ribs (90, 90a-90d, 90'a, 90"a, 190, 190a-190e, 290, 290a-290e, 390, 390a-390g) is spaced from an adjacent rib (90, 90a-90d, 90'a, 90"a, 190, 190a-190e, 290, 290a-290e, 390, 390a-390g) to define a space (S, Sₐ-S_{g}) between adjacent ribs (90, 90a-90d, 90'a, 90"a, 190, 190a-190e, 290, 290a-290e, 390, 390a-390g).

2. The mixing beater (30, 130, 230, 330) of claim 1, wherein each of the plurality of ribs (90, 90a-90d, 90'a, 90"a, 190, 190a-190e, 290, 290a-290e, 390, 390a-390g) has a cross-sectional shape selected from at least one of a rectangular, diamond, circular, oval, hexagonal, triangular, square, and pentagonal cross-sectional shape.

3. The mixing beater (30, 130, 230, 330) of either one of claims 1 or 2, wherein each of the plurality of ribs (90, 90a-90d, 90'a, 90"a, 190, 190a-190e, 290, 290a-290e, 390, 390a-390g) has a rib thickness (Th, Thₐ-Th_{g}, Th'ₐ, Th"ₐ) of from about 2.5 mm to about 6 mm.

4. The mixing beater (30, 130, 230, 330) of any one of claims 1-3, wherein the plurality of ribs (90, 90a-90d, 90'a, 90"a, 190, 190a-190e, 290, 290a-290e, 390, 390a-390g) comprises at least 4 ribs (90, 90a-90d, 90'a, 90"a, 190, 190a-190e, 290, 290a-290e, 390, 390a-390g).

5. The mixing beater (30, 130, 230, 330) of any one of claims 1-4, wherein the space (S, Sₐ-S_{g}) between each adjacent rib (90, 90a-90d, 90'a, 90"a, 190, 190a-190e, 290, 290a-290e, 390, 390a-390g) is the same.

6. The mixing beater (30, 130, 230, 330) of any one of claims 1-5, wherein the space (S, Sₐ-S_{g}) between adjacent ribs (90, 90a-90d, 90'a, 90"a, 190, 190a-190e, 290, 290a-290e, 390, 390a-390g) is between from about 8 mm to about 20 mm.

7. The mixing beater (30, 130, 230, 330) of any one of claims 1-6, further comprising:
a vertical plane aligned with the central axis (86) of said mixing beater (10) and extending through the first and second arms (74, 174, 274, 374 and 76, 176, 276, 376) and the frame tip (78, 178, 278, 378), and wherein the plurality of ribs (90, 90a-90d, 90'a, 90"a, 190, 190a-190e, 290, 290a-290e, 390, 390a-390g) is aligned with the vertical plane.

8. The mixing beater (30, 130, 230, 330) of any one of claims 1-7, wherein the collar (60, 160, 260, 360) includes a central shaft (62, 162, 262, 362) defining a central bone (64).

9. The mixing beater (30, 130, 230, 330) of claim 8, wherein the central shaft (62, 162, 262, 362) includes a slot (66) configured to receive a locking pin (70) for connection to said stand mixer (10).

10. The mixing beater (30, 130, 230, 330) of any one of claims 1-9, wherein the first and second arms (74, 174, 274, 374 and 76, 176, 276, 376) are coupled to the collar (60, 160, 260, 360) by a first frame branch (80, 180, 280, 380) and a second frame branch (82, 182, 282, 382).

11. The mixing beater (30, 130, 230, 330) of any one of claims 1-10, wherein each of the plurality of ribs (90, 90a-90d, 90'a, 90"a, 190, 190a-190e, 290, 290a-290e, 390, 390a-390g) has a ratio of a width (W) to thickness (Th) that is greater than or equal to 1 and less than or equal to 2 (1 ≤ W:Th ≤ 2).
